# EUROPEAN PATENT APPLICATION

(11) **EP 4 472 308 A1**
(43) Date of publication of application: **04.12.2024**
(21) Application number: 22922914.1
(22) Date of filing: 29.01.2022
(51) Int. Cl.: H04W 68/00

(54) **PAGING TRIGGERING METHOD AND APPARATUS**

(71) Applicant: Beijing Xiaomi Mobile Software Co., Ltd., Beijing 100085 (CN)
(72) Inventor: MU, Qin, Beijing 100085 (CN)
(74) Representative: Gunzelmann, Rainer
(86) International application number: PCT/CN2022/075098
(87) International publication number: WO 2023/142085

(57) **Abstract**

Disclosed in embodiments of the present application are a paging triggering method and apparatus. In response to a change in system information, paging is triggered for a terminal device of a target type, wherein the change in system information is associated with the terminal device of the target type of at least one type, such that terminal devices of different types can be in different paging groups. When system information only for a terminal device of a certain type changes, a network device can only trigger paging for the terminal device of the type, such that the signaling overhead is effectively saved, the power consumption is reduced, and the communication efficiency is improved.

## Description

### TECHNICAL FIELD

The disclosure relates to a field of communication technology, in particular to paging triggering methods and paging triggering apparatuses.

### BACKGROUND

With the continuous development of Internet of Things technologies, services such as video surveillance, smart home, wearable device, and industrial sensor monitoring, are also becoming popular. These services generally have relatively high requirements for speed and latency. In order to meet the requirements of such terminal (Internet of Things device), a new user equipment (UE), i.e., a reduced capability UE, is introduced to be applied to 5G new radio (NR).

In the related art, the network device is capable of notifying the terminal device of a change in system information through paging. Due to the introduction of different terminal types or terminal features, the system information supports system information fields for different terminal types. When the information field for only a certain type of terminal in the system information is updated, the network device still triggers paging for all terminals, which may lead to signaling resource waste and increase terminal power consumption.

### SUMMARY

According to a first aspect of embodiments of the disclosure, a paging triggering method, performed by a network device, is provided. The method includes:
in response to a change in system information, triggering a paging for a target type of terminal device;
in which the change in the system information is associated with the target type of terminal device among at least one type of terminal device.

In some embodiments, in the at least one type, each type is configured with at least one of a corresponding paging radio network temporary identity, a corresponding resource or a corresponding paging early indication.

In some embodiments, triggering the paging for the target type of terminal device includes:
scrambling a first paging message using a paging radio network temporary identity corresponding to the target type; and
sending a scrambled first paging message to the target type of terminal device.

In some embodiments, triggering the paging for the target type of terminal device includes:
sending a second paging message using a resource corresponding to the target type.

In some embodiments, the resource includes at least one of:
a bandwidth part (BWP), a control resource set (CORESET), a search space, or a paging occasion.

In some embodiments, triggering the paging for the target type of terminal device includes:
sending the paging early indication to the target type of terminal device, the paging early indication being used for instructing the target type of terminal device to receive a third paging message; and
sending the third paging message to the target type of terminal device.

In some embodiments, the paging early indication is carried in downlink control information (DCI).

According to a second aspect of embodiments of the disclosure, a paging triggering method, performed by a terminal device, is provided. The method includes:
in response to a paging triggered by a network device, obtaining changed system information, in which a change in system information is associated with a target type to which the terminal device belongs.

In some embodiments, the target type is one of at least one type,
in which each of the at least one type is configured with at least one of a corresponding paging radio network temporary identity, a corresponding resource or a corresponding paging early indication.

In some embodiments, the method includes:
receiving a first paging message sent by the network device, in which the first paging message is scrambled using a paging radio network temporary identity corresponding to the target type to which the terminal device belongs.

In some embodiments, the method includes:
receiving a second paging message on a resource corresponding to the target type to which the terminal device belongs.

In some embodiments, the resource includes at least one of:
a bandwidth part (BWP), a control resource set (CORESET), a search space, or a paging occasion.

In some embodiments, the method includes:
receiving a paging early indication sent by the network device; and
in response to the paging early indication, receiving a third paging message.

In some embodiments, the paging early indication is carried in downlink control information (DCI).

According to a third aspect of embodiments of the disclosure, a paging triggering apparatus, applied to a network device, is provided. The apparatus includes:
a transceiver unit, configured to, in response to a change in system information, trigger a paging for a target type of terminal device;
in which the change in the system information is associated with the target type of terminal device in at least one type of terminal device.

In some embodiments, in the at least one type, each type is configured with at least one of a corresponding paging radio network temporary identity, a corresponding resource or a corresponding paging early indication.

In some embodiments, the transceiver unit is configured to:
scramble a first paging message using a paging radio network temporary identity corresponding to the target type; and
send a scrambled first paging message to the target type of terminal device.

In some embodiments, the transceiver unit is configured to:
send a second paging message using a resource corresponding to the target type.

In some embodiments, the resource includes at least one of:
a bandwidth part (BWP), a control resource set (CORESET), a search space, or a paging occasion.

In some embodiments, the transceiver unit is configured to:
send the paging early indication to the target type of terminal device, the paging early indication being used for instructing the target type of terminal device to receive a third paging message; and
send the third paging message to the target type of terminal device.

In some embodiments, the paging early indication is carried in downlink control information (DCI).

According to a fourth aspect of embodiments of the disclosure, a paging triggering apparatus, applied to a terminal device, is provided. The apparatus includes:
a transceiver unit, configured to, in response to a paging triggered by a network device, obtain changed system information, in which a change in system information is associated with a target type to which the terminal device belongs.

In some embodiments, the target type is one of at least one type,
in which each of the at least one type is configured with at least one of a corresponding paging radio network temporary identity, a corresponding resource or a corresponding paging early indication.

In some embodiments, the transceiver unit is configured to:
receive a first paging message sent by the network device, in which the first paging message is scrambled using a paging radio network temporary identity corresponding to the target type to which the terminal device belongs.

In some embodiments, the transceiver unit is configured to:
receive a second paging message on a resource corresponding to the target type to which the terminal device belongs.

In some embodiments, the resource includes at least one of:
a bandwidth part (BWP), a control resource set (CORESET), a search space, or a paging occasion.

In some embodiments, the transceiver unit is configured to:
receive a paging early indication sent by the network device; and
in response to the paging early indication, receive a third paging message.

In some embodiments, the paging early indication is carried in downlink control information (DCI).

According to a fifth aspect of embodiments of the disclosure, a communication device is provided. The communication device includes: a processor and a memory having a computer program stored thereon. The processor executes the computer program stored in the memory, to cause the communication device to performing the paging triggering method described in the first aspect above.

According to a sixth aspect of embodiments of the disclosure, a communication device is provided. The communication device includes: a processor and a memory having a computer program stored thereon. The processor executes the computer program stored in the memory, to cause the communication device to perform the paging triggering method described in the second aspect above.

According to a seventh aspect of embodiments of the disclosure, a communication device is provided. The communication device includes: a processor and an interface circuit. The interface circuit is configured to receive code instructions and transmit the code instructions to the processor. The processor is configured to run the code instructions to cause the communication device to perform the paging triggering method described in the first aspect above.

According to an eighth aspect of embodiments of the disclosure, a communication device is provided. The communication device includes: a processor and an interface circuit. The interface circuit is configured to receive code instructions and transmit the code instructions to the processor. The processor is configured to run the code instructions to cause the communication device to perform the paging triggering method described in the second aspect above.

According to a ninth aspect of embodiments of the disclosure, a computer-readable storage medium for storing instructions is provided. When the instructions are executed, the paging triggering method described in the first aspect above is performed.

According to a tenth aspect of embodiments of the disclosure, a computer-readable storage medium for storing instructions is provided. When the instructions are executed, the paging triggering method described in the second aspect above is performed.

According to an eleventh aspect of embodiments of the disclosure, a computer program is provided. When the computer program runs on a computer, the computer is caused to perform the paging triggering method described in the first aspect above.

According to a twelfth aspect of embodiments of the disclosure, a computer program is provided. When the computer program runs on a computer, the computer is caused to perform the paging triggering method described in the second aspect above.

With the paging triggering methods and the paging triggering apparatuses according to embodiments of the disclosure, in response to the change in the system information, the paging for the target type of terminal device is triggered. The change in the system information is associated with the target type of terminal device in at least one type of terminal device. Different types of terminal devices may be divided into multiple paging groups, when the system information of only a certain type of terminal devices has changed, the network device only triggers the paging for this type of terminal, which effectively saves signaling overhead, reduces power consumption and improves communication efficiency.

Additional aspects and advantages of embodiments of disclosure will be given in part in the following descriptions, become apparent in part from the following descriptions, or be learned from the practice of embodiments of the disclosure.

### BRIEF DESCRIPTION OF THE DRAWINGS

In order to clearly illustrate technical solutions of embodiments of the disclosure or background technologies, a description of drawings used in embodiments of the disclosure or the background technologies is given below.
FIG. 1 is a flowchart illustrating a paging triggering method according to an embodiment of the disclosure.
FIG. 2 is a flowchart illustrating a paging triggering method according to an embodiment of the disclosure.
FIG. 3 is a flowchart illustrating a paging triggering method according to an embodiment of the disclosure.
FIG. 4 is a flowchart illustrating a paging triggering method according to an embodiment of the disclosure.
FIG. 5 is a flowchart illustrating a paging triggering method according to an embodiment of the disclosure.
FIG. 6 is a flowchart illustrating a paging triggering method according to an embodiment of the disclosure.
FIG. 7 is a flowchart illustrating a paging triggering method according to an embodiment of the disclosure.
FIG. 8 is a flowchart illustrating a paging triggering method of an embodiment according to the disclosure.
FIG. 9 is a schematic diagram illustrating a paging triggering apparatus according to an embodiment of the disclosure.
FIG. 10 is a schematic diagram illustrating a paging triggering apparatus according to an embodiment of the disclosure.
FIG. 11 is a schematic diagram illustrating a paging triggering device according to an embodiment of the disclosure.
FIG. 12 is a schematic diagram illustrating a chip according to an embodiment of the disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with embodiments of the disclosure. Instead, they are merely examples of apparatuses and methods consistent with aspects related to the disclosure as recited in the appended claims.

The terms used in the disclosure are only for the purpose of describing specific embodiments, and are not intended to limit embodiments of the disclosure. The singular forms of "a" and "the" used in the disclosure and appended claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in embodiments of the disclosure to describe various types of information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein may be interpreted as "when", "while" or "in response to determining".

Embodiments of the disclosure are described in detail below, and examples of which are illustrated in the accompanying drawings, in which the same or similar symbols indicate the same or similar elements. Embodiments described below with reference to the accompanying drawings are examples and are intended to be used to explain the disclosure and are not to be construed as limiting the disclosure.

It is noteworthy that the technical solutions of embodiments of the disclosure may be applied to various communication systems, such as, a long term evolution (LTE) system, a 5th generation (5G) mobile communication system, a 5G new radio (NR) system, or other future new mobile communication systems.

The network device in embodiments of the disclosure is an entity on a network side for transmitting or receiving signals. For example, the network device may be an evolved NodeB (eNB), a transmission reception point (TRP), a next generation NodeB (gNB) in a NR system, a base station in other future mobile communication systems, or an access node in a wireless fidelity (WiFi) system. The specific technology and specific device form adopted by the network device are not limited in embodiments of the disclosure. The network device according to embodiments of the disclosure may be composed of a central unit (CU) and distributed unit(s) (DU). The CU may also be called control unit. The use of CU-DU structure allows to divide a protocol layer of the network device, such as a base station, such that some of the protocol layer functions are placed in the CU for centralized control, and some or all of the remaining protocol layer functions are distributed in the DU(s), and the DU(s) is/are centrally controlled by the CU.

The terminal device in embodiments of the disclosure is an entity on a user side for receiving or transmitting signals, such as a cellular phone. The terminal device may also be referred to as terminal, user equipment (UE), mobile station (MS), mobile terminal (MT), and the like. The terminal device may be a car with communication functions, a smart car, a mobile phone, a wearable device, a Pad, a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. The specific technology and specific device form adopted by the terminal device are not limited in embodiments of the disclosure.

It is understandable that the communication system described in embodiments of the disclosure is intended to clearly illustrate the technical solutions according to embodiments of the disclosure, and does not constitute a limitation on the technical solutions according to embodiments of the disclosure. It is understandable by those skilled in the art that as system architectures evolve and new business scenarios emerge, the technical solutions according to embodiments of the disclosure are also applicable to similar technical problems.

Paging triggering methods and paging triggering apparatuses will be introduced in detail below with reference to the accompanying drawings.

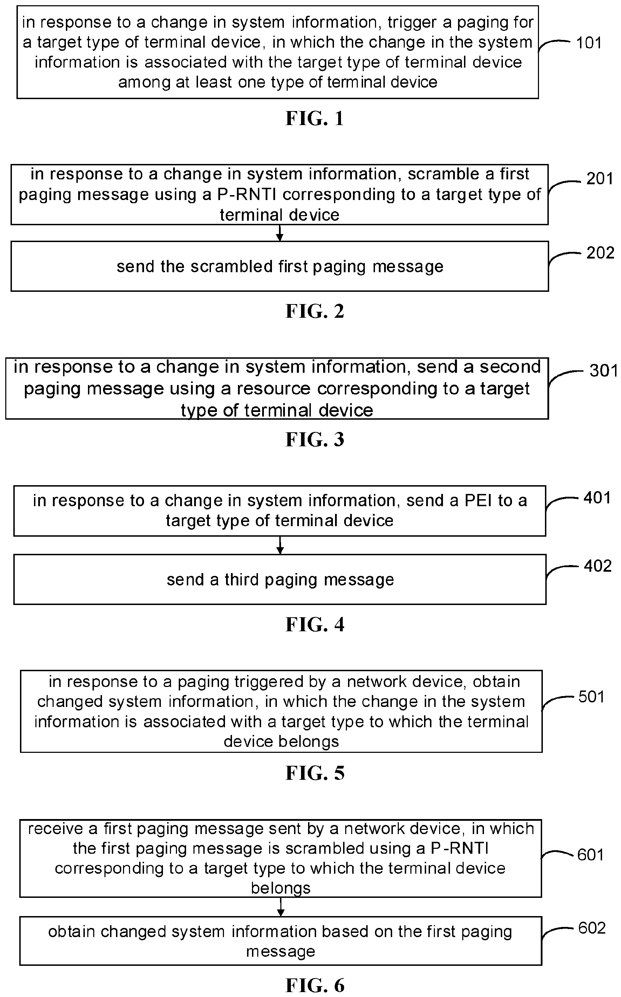

FIG. 1 is a flowchart illustrating a paging triggering method according to an embodiment of the disclosure. It is noteworthy that the paging triggering method of embodiments of the disclosure is performed by a network device. As illustrated in FIG. 1, the method includes the following.

At step 101, in response to a change in system information, a paging for a target type of terminal device(s) is triggered, in which the change in the system information is associated with the target type of terminal device(s) among at least one type of terminal device(s).

In an embodiment of the disclosure, the communication system includes at least one type of terminal device(s), and the change in the system information may be associated with a certain type of terminal device(s) among the at least one type of terminal device(s). The terminal devices may be classified based on their features. It is understandable that there are many ways to classify the terminal devices.

In some examples, the terminal devices may be classified based on their capabilities. For example, the communication system may include: ordinary terminal devices (which may be called legacy UE or non-RedCap UE), reduced capability (RedCap) terminal devices, enhanced reduced capability (eRedCap) terminal devices, etc.

In some examples, the terminal devices may be classified based on protocols supported by the terminal devices. For example, the communication system may include: terminal devices supporting the Release 15 (R15) protocol, terminal devices supporting the Release 17 (R17) protocol, and so on.

In some examples, the terminal devices may be classified based on features supported by the terminal devices. For example, the communication system may include: terminal devices that support coverage enhancement and terminal devices that do not support coverage enhancement.

In embodiments of the disclosure, the change in the system information may be associated with the target type of terminal device(s) among the at least one type of terminal device(s). That is, the change in the system information is a change for the target type of terminal device(s) among the at least one type of terminal device(s) and thus the information field corresponding to the target type of terminal devices in the system information is updated. In this case, the network device may trigger the paging for the target type of terminal device(s).

The system information may be at least one of a Master Information Block (MIB) or a series of System Information Blocks (SIBs).

In some examples, each type of terminal device is configured with at least one of a corresponding paging radio network temporary identity (P-RNTI), a corresponding resource or a corresponding paging early indication (PEI).

The resource includes at least one of a bandwidth part (BWP), a control resource set (CORESET), a search space, or a paging occasion (PO).

It is noteworthy that in embodiments of the disclosure, triggering by the network device the paging for the target type of terminal device(s) means that only the target type of terminal devices may obtain a paging message sent by the network device and obtain the changed system information in response to the triggered paging.

The network device may trigger the paging for the target type of terminal device(s) based on at least one of the P-RNTI, the resource or the PEI corresponding to the target type of terminal device(s).

As a first possible implementation, the network device may use a P-RNTI corresponding to the target type of terminal device(s) to scramble the paging message, and send the scrambled paging message to the target type of terminal device(s).

As a second possible implementation, the network device may use a resource corresponding to the target type of terminal device(s) to send a paging message.

As a third possible implementation, the network device may send a PEI to the target type of terminal device(s), and then send a paging message to the target type of terminal device(s). The PEI is used for instructing the target type of terminal device(s) to receive the paging message.

As a fourth possible implementation, the network device may use a P-RNTI corresponding to the target type of terminal device(s) to scramble a paging message, and send the scrambled paging message on a resource corresponding to the target type of terminal device(s).

As a fifth possible implementation, the network device may send a PEI to the target type of terminal device(s), and then send a paging message scrambled by a P-RNTI corresponding to the target type of terminal device(s) to the target type of terminal device(s). The PEI is used for instructing the target type of terminal device(s) to receive the paging message.

As a sixth possible implementation, the network device may send a PEI to the target type of terminal device(s), and then send a paging message using a resource corresponding to the target type of terminal device(s). The PEI is used for instructing the target type of terminal device(s) to receive the paging message.

As a seventh possible implementation, the network device may send a PEI to the target type of terminal device(s), and then send a paging message scrambled by a P-RNTI corresponding to the target type of terminal device(s) on a resource corresponding to the target type of terminal device(s). The PEI is used for instructing the target type of terminal device(s) to receive the paging message.

In embodiments of the disclosure, the PEI may be carried in downlink control information (DCI).

In some implementations, the DCI may carry a respective PEI corresponding to each type of terminal device(s) among the at least one type of terminal device(s). The PEI is used for instructing the corresponding type of terminal device(s) to receive or not receive the paging message, or used to indicate whether there is a paging message for the corresponding type of terminal device(s).

In conclusion, in response to the change in the system information, the network device triggers the paging for the target type of terminal devices. The change in the system information is associated with the target type of terminal devices among at least one type of terminal devices. Different types of terminal devices may be divided into multiple paging groups. When the system information of only a certain type of terminal devices has changed, the network device only triggers the paging for this type of terminal devices, which effectively saves signaling overhead, reduces power consumption and improves communication efficiency.

FIG. 2 is a flowchart illustrating a paging triggering method according to an embodiment of the disclosure. It is noteworthy that the paging triggering method according to embodiments of the disclosure is performed by a network device. As illustrated in FIG. 2, the method includes the following.

At step 201, in response to a change in system information, a first paging message is scrambled using a P-RNTI corresponding to a target type of terminal device(s).

The change in the system information is associated with the target type of terminal device(s) among at least one type of terminal device(s). It is understandable that the target type may be any one of the at least one type. In embodiments of the disclosure, the methods for classifying the terminal devices are as described above and will not be repeated here.

The system information may be at least one of an MIB or an SIB.

In embodiments of the disclosure, each type of terminal device(s) has a corresponding P-RNTI. In response to the change in the system information being a change associated with the target type of terminal device(s), the network device scrambles the first paging message using a P-RNTI corresponding to the target type of terminal device(s).

After receiving the first paging message scrambled by the P-RNTI corresponding to the target type of terminal device(s), the target type of terminal device(s) may successfully decode the scrambled first paging message and obtain the first paging message. That is, the network device triggers the paging for the target type of terminal device(s).

At step 202, the scrambled first paging message is sent.

After scrambling the first paging message using the P-RNTI corresponding to the target type of terminal device(s), the network device sends the scrambled first paging message.

The target type of terminal devices receives the scrambled first paging message, obtains the first paging message, and obtains the changed system information in response to the triggered paging.

It is understandable that, within a serving cell where the network device is located, any terminal device may receive the scrambled first paging message, but only the target type of terminal devices may obtain the first paging message after receiving the scrambled first paging message and obtain the changed system information in response to obtaining the first paging message. That is, the network device triggers the paging for the target type of terminal devices, indicating that the system information of the target type of terminal devices has changed. In an implementation, since the transmitted first paging message is scrambled by the P-RNTI corresponding to the target type of terminal devices, only the target type of terminal devices may decode the message to obtain the first paging message.

In conclusion, in response to the change in the system information, the network device scrambles the first paging message by using the P-RNTI corresponding to the target type of terminal device(s), and sends the scrambled first paging message to the target type of terminal device(s). Different types of terminal devices may be divided into multiple paging groups. When the system information of only a certain type of terminal device(s) has changed, the network device scrambles the paging message by using the P-RNTI corresponding to this type of terminal device(s), so that only this type of terminal device(s) may correctly decode the received message and obtain the paging message. The network device only triggers the paging for this type of terminal devices, which effectively saves signaling overhead, reduces power consumption and improves communication efficiency.

FIG. 3 is a flowchart illustrating a paging triggering method according to an embodiment of the disclosure. It is noteworthy that the paging triggering method according to embodiments of the disclosure is performed by a network device. As illustrated in FIG. 3, the method includes the following.

At step 301, in response to a change in system information, a second paging message is sent using a resource corresponding to a target type of terminal device(s).

The change in the system information is associated with the target type of terminal device(s) among at least one type of terminal device(s). It is understandable that the target type of terminal device(s) may be terminal device(s) corresponding to any one of the at least one type. In embodiment of the disclosure, the methods for classifying the terminal devices are as described above and will not be repeated here.

The system information may be at least one of an MIB or an SIB.

In some examples, the resource includes at least one of a BWP, a CORESET, a search space, or a PO.

In embodiments of the disclosure, each type of the at least one type has a corresponding resource. In response to the change in the system information being a change associated with the target type of terminal device(s), the network device sends the second paging message using a resource corresponding to the target type of terminal device(s).

The target type of terminal device(s) may monitor on the resource corresponding to the target type of terminal device(s) and receive the second paging message. That is, the network device triggers the paging for the target type of terminal device(s), indicating that the system information of the target type of terminal device(s) has changed. The target type of terminal device(s) obtains the changed system information in response to the triggered paging.

For example, in the serving cell where the network device is located, there may be n types of terminal devices. Each type of the n types is configured with a corresponding search space, i.e., a search space 1 corresponds to a type 1, a search space 2 corresponds to a type 2, ..., a search space n corresponds to a type n. When the change in the system information is associated with the type 1 of terminal device(s), that is, the system information of the type 1 of terminal device(s) has changed, the network device sends a paging message in the search space 1.

It is understood that each type is configured with a corresponding resource, and each type of terminal devices monitors the paging message sent by the network device on its own corresponding resource, so that when the network device sends the second paging message using the resource corresponding to the target type, the paging is triggered only for the target type of terminal device(s).

In conclusion, in response to the change in the system information, the network device sends the second paging message using a resource corresponding to the target type of terminal device(s). Different types of terminal devices may be divided into multiple paging groups. When the system information of only a certain type of terminal device(s) has changed, the network device sends the paging message on a resource corresponding to this type of terminal device(s). Each type of terminal device(s) performs the paging monitoring on its own corresponding resource, but only this type of terminal device(s) may obtain the paging message. The network device only triggers the paging for this type of terminal device(s), which effectively saves signaling overhead, reduces power consumption and improves communication efficiency.

FIG. 4 is a flowchart illustrating a paging triggering method according to an embodiment of the disclosure. It is noteworthy that the paging triggering method according to embodiments of the disclosure is performed by a network device. As illustrated in FIG. 4, the method includes the following.

At step 401, in response to a change in system information, a PEI is sent to a target type of terminal device(s).

The PEI is used for instructing the target type of terminal device(s) to receive a third paging message at a corresponding PO. The change in the system information is associated with the target type of terminal device(s) among at least one type of terminal devices. It is understood that the target type of terminal device(s) may be any type of terminal device(s) among the at least one type of terminal device(s). In embodiments of the disclosure, the methods for classifying the terminal devices are as described above and will not be repeated herein.

The system information may be at least one of an MIB or an SIB.

In embodiments of the disclosure, each type of terminal device(s) of the at least one type of terminal device(s) has a corresponding PEI. In response to the change in the system information being a change associated with the target type of terminal device(s), the network device sends the PEI to the target type of terminal device(s).

After receiving the PEI, the target type of terminal device(s) receives the third paging message at a certain PO based on the PEI, i.e., the network device triggers the paging for the target type of terminal device(s). The target type of terminal device(s) may obtain the changed system information in response to the triggered paging.

In some implementations, the PEI may be carried in DCI.

In some implementations, the DCI may carry a respective PEI corresponding to each type of terminal device(s) of the at least one type of terminal device(s). The PEI is used for instructing the corresponding type of terminal device(s) to receive or not receive the paging message.

In some examples, an information field in the DCI may carry the respective PEI corresponding to each type of terminal device(s). The bit value of a bit included in the information field of the PEI may be used for instructing a certain type of terminal device(s) to receive or not receive the paging message. For example, if the bit value is 1, it indicates that the corresponding type of terminal device(s) receives the paging message, and if the bit value is 0, it indicates that the corresponding type of terminal device(s) does not receive the paging message. Or, if the bit value is 0, it indicates that the corresponding type of terminal device(s) receives the paging message, and if the bit value is 1, it indicates that the corresponding type of terminal device(s) does not receive the paging message.

For example, in the serving cell where the network device is located, there may be n types of terminal devices. Each type of terminal device(s) among these n types of terminal devices is configured with a corresponding PEI, and the DCI carries the PEIs respectively corresponding to these n types of terminal devices. In an example, the DCI at least has an information field containing n bits respectively corresponding to the n types of terminals, in which a first bit is a PEI corresponding to the type 1, a second bit is a PEI corresponding to the type 2, ......, an nth bit is a PEI corresponding to the type n, and if the bit value is 1, it indicates that the corresponding type of terminal device(s) receives the paging message, and if the bit value is 0, it indicates that the corresponding type of terminal device(s) does not receive the paging message. When the change in the system information is associated with the type 1 of terminal device(s), i.e., the system information of the type 1 of terminal device(s) has changed, the network device sends the DCI carrying the PEIs corresponding to the n types and in n-bit information field, the first bit has a bit value of 1 and the remaining bits all have a bit value of 0. That is, only the target type of terminal device(s) receives the paging message at a certain PO, while other types of terminal devices do not need to receive the paging message (e.g., they may remain in a sleep state). Certainly, using the bit value of 1 for instructing the corresponding type of terminal device(s) to receive the paging message is only one possible implementation, and it is also possible that the bit value of 0 is used for instructing the corresponding type of terminal device(s) to receive the paging message.

It is understood that in the serving cell where the network device is located, any terminal device may receive the DCI carrying the respective PEI corresponding to each type of terminal device(s) of the at least one type of terminal device(s).

Certainly, using different bits corresponding to different types of terminal devices is an explicit indication way, and an implicit indication may also be adopted. For example, different DCI formats correspond to different types of terminal devices, different coding methods correspond to different types of terminal devices, or the like.

At step 402, a third paging message is sent.

After sending the PEI to the target type of terminal device(s), the network device sends the third paging message to the target type of terminal device(s).

After receiving the PEI, the target type of terminal device(s) receives the third paging message based on the indication of the PEI. That is, the network device triggers the paging for the target type of terminal device(s), indicating that the system information of the target type of terminal device(s) has changed. The target type of terminal device(s) may obtain the changed system information in response to the triggered paging.

In conclusion, in response to the change in the system information, the network device sends PEIs to the target type of terminal device(s), and then sends the third paging message. Different types of terminal devices may be divided into multiple paging groups. When the system information of only a certain type of terminal device(s) has changed, the network device sends the PEIs to the target type of terminal device(s) to instruct only the target type of terminal device(s) to receive the paging message, so that only this type of terminal device(s) receives the paging message. The network device only triggers the paging for this type of terminal(s), which effectively saves signaling overhead, reduces power consumption and improves communication efficiency.

It is noted that in embodiments of the disclosure, the first paging message, the second paging message, and the third paging message, may all be the same paging message. They are named differently only to differentiate the application scenarios, and it does not mean that their contents are different. Certainly, the first paging message, the second paging message, and the third paging message may be different messages, which is not limited in embodiments of the disclosure.

FIG. 5 is a flowchart illustrating a paging triggering method according to an embodiment of the disclosure. It is noteworthy that the paging triggering method according to embodiments of the disclosure is performed by a terminal device. As illustrated in FIG. 5, the method includes the following.

At step 501, in response to a paging triggered by a network device, changed system information is obtained, in which a change in system information is associated with a target type to which the terminal device belongs.

In an embodiment of the disclosure, the communication system includes at least one type of terminal device(s), and the change in the system information may be associated with a certain type of terminal device(s) among the at least one type of terminal device(s). The terminal devices may be classified based on their features. It is understandable that there are many ways to classify the terminal devices.

In some examples, the terminal devices may be classified based on their capabilities. For example, the communication system may include: ordinary terminal devices (which may be called legacy UE or non-RedCap UE), reduced capability (RedCap) terminal devices, enhanced reduced capability (eRedCap) terminal devices, etc.

In some examples, the terminal devices may be classified based on protocols supported by the terminal devices. For example, the communication system may include: terminal devices supporting the R15 protocol, terminal devices supporting the R17 protocol, and so on.

In some examples, the terminal devices may be classified based on features supported by the terminal devices. For example, the communication system may include: terminal devices that support coverage enhancement and terminal devices that do not support coverage enhancement.

In embodiments of the disclosure, the change in the system information may be associated with the target type to which the terminal device belongs among the at least one type. That is, the change in the system information is a change for the target type of terminal device (s) among the at least one type of terminal device(s) and thus the information field corresponding to the target type of terminal device(s) in the system information is updated. In this case, the network device may trigger the paging for the target type of terminal device(s).

The system information may be at least one of a MIB or a series of SIBs.

In some examples, each type of terminal device(s) is configured with at least one of a corresponding P-RNTI, a corresponding resource or a corresponding PEI.

The resource includes at least one of a BWP, a CORESET, a search space, or a PO.

In embodiments of the disclosure, the target type of terminal device(s) may obtain the changed system information in response to the paging triggered by the network device for the target type of terminal device(s).

The network device may trigger the paging for the target type of terminal device(s) based on at least one of the P-RNTI, the resource, or the PEI corresponding to the target type of terminal device(s).

As a first possible implementation, the network device may use a P-RNTI corresponding to the target type of terminal device(s) to scramble a paging message, and send the scrambled paging message to the target type of terminal device(s).

As a second possible implementation, the network device may use a resource corresponding to the target type of terminal device(s) to send a paging message.

As a third possible implementation, the network device may send a PEI to the target type of terminal device(s), and then send a paging message to the target type of terminal device(s). The PEI is used for instructing the target type of terminal device(s) to receive the paging message.

As a fourth possible implementation, the network device may use a P-RNTI corresponding to the target type of terminal device(s) to scramble a paging message, and send the scrambled paging message on a resource corresponding to the target type of terminal device(s).

As a fifth possible implementation, the network device may send a PEI to the target type of terminal device(s), and then send a paging message scrambled by a P-RNTI corresponding to the target type of terminal device(s) to the target type of terminal device(s). The PEI is used for instructing the target type of terminal device(s) to receive the paging message.

As a sixth possible implementation, the network device may send a PEI to the target type of terminal device(s), and then send a paging message using a resource corresponding to the target type of terminal device(s). The PEI is used for instructing the target type of terminal device(s) to receive the paging message.

As a seventh possible implementation, the network device may send a PEI to the target type of terminal device(s), and then send a paging message scrambled by a P-RNTI corresponding to the target type of terminal device(s) on a resource corresponding to the target type of terminal device(s). The PEI is used for instructing the target type of terminal device(s) to receive the paging message.

In embodiments of the disclosure, the PEI may be carried in DCI.

In some implementations, the DCI may carry a respective PEI corresponding to each type of terminal device(s) among the at least one type of terminal device(s). The PEI is used for instructing the corresponding type of terminal device(s) to receive or not receive a paging message, or used to indicate whether there is a paging message for the corresponding type of terminal device(s).

In conclusion, in response to the paging triggered by the network device, the changed system information is obtained, in which the change in the system information is associated with a target type to which the terminal device belongs. Different types of terminal devices may be divided into multiple paging groups. When the system information of only a certain type of terminal device(s) has changed, the network device only triggers the paging for this type of terminal device(s), which effectively saves signaling overhead, reduces power consumption and improves communication efficiency.

FIG. 6 is a flowchart illustrating a paging triggering method according to an embodiment of the disclosure. It is noteworthy that the paging triggering method according to embodiments of the disclosure is performed by a terminal device. As illustrated in FIG. 6, the method includes the following.

At step 601, a first paging message sent by a network device is received, in which the first paging message is scrambled using a P-RNTI corresponding to a target type to which the terminal device belongs.

It is understandable that the target type of terminal device(s) may be any one type of terminal device(s) among the at least one type of terminal device(s). In embodiments of the disclosure, the methods for classifying the terminal devices are as described above and will not be repeated here.

The system information may be at least one of an MIB or an SIB.

In embodiments of the disclosure, each type of terminal device(s) of the at least one type of terminal device(s) has a corresponding P-RNTI. In response to the change in the system information for the target type of terminal device(s), the network device scrambles the first paging message using a P-RNTI corresponding to the target type of terminal device(s). After receiving the scrambled first paging message sent by the network device, the target type of terminal device(s) decodes the scrambled first paging message. The scrambled first paging message is obtained by the network device by scrambling the first paging message using the corresponding P-RNTI of the target type of terminal device(s). After receiving the scrambled first paging message, the target type of terminal device(s) decodes the scrambled first paging message, and then determines that the first paging message is a message scrambled by the corresponding P-RNTI of the target type of terminal device(s). That is, the target type of terminal device(s) determines that the network device has triggered the paging for the target type of terminal device(s).

At step 602, changed system information is obtained based on the first paging message.

The change in the system information is associated with the target type of terminal device(s).

In an embodiment of the disclosure, the terminal device may obtain, based on the P-RNTI corresponding to the target type to which it belongs, the first paging message from the received scrambled first paging message. That is, the terminal device receives an indication that the system information has changed.

The terminal device may obtain the changed system information based on the first paging message.

In conclusion, the first paging message sent by the network device is received, in which the first paging message being scrambled using a P-RNTI corresponding to the type to which the terminal device belongs. According to the first paging message, the changed system information is obtained. Different types of terminal devices may be divided into multiple paging groups. When the system information of only a certain type of terminal device(s) has changed, the network device only triggers the paging for this type of terminal device(s) and only this type of terminal device(s) may obtain the changed system information, which effectively saves signaling overhead, reduces power consumption and improves communication efficiency.

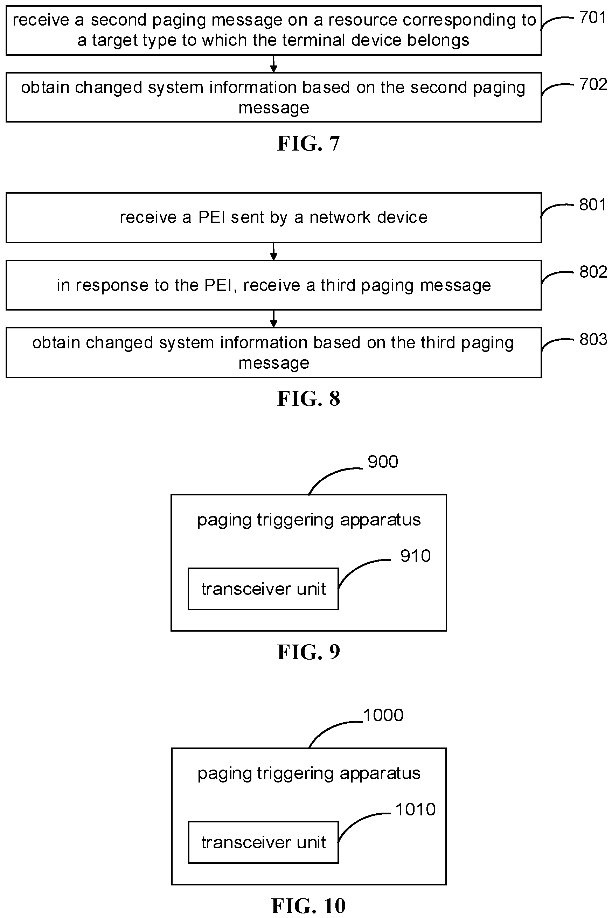

FIG. 7 is a flowchart illustrating a paging triggering method according to an embodiment of the disclosure. It is noteworthy that the paging triggering method according to embodiments of the disclosure is performed by a terminal device. As illustrated in FIG. 7, the method includes the following.

At step 701, a second paging message is received on a resource corresponding to a target type to which the terminal device belongs.

It is understandable that the target type to which the terminal device belongs may be any one of the at least one type to which terminal device belong. In embodiments of the disclosure, the methods for classifying the terminal devices are as described above and will not be repeated here.

The system information may be at least one of an MIB or an SIB.

In some examples, the resource includes at least one of a BWP, a CORESET, a search space, or a PO.

In embodiments of the disclosure, each type of terminal device(s) among the at least one type of terminal device(s) has a corresponding resource. In response to the change in the system information being a change associated with the target type of terminal device(s), the network device sends the second paging message using a resource corresponding to the target type of terminal device(s).

The target type of terminal device(s) may monitor on the resource corresponding to the target type of terminal device(s) to receive the second paging message, to determine whether the network device triggers the paging for the target type of terminal device(s). The target type of terminal device(s) obtains the changed system information in response to the triggered paging.

For example, in the serving cell where the network device is located, there may be n types of terminal devices. Each type of the n types is configured with a corresponding search space, i.e., a search space 1 corresponds to a type 1, a search space 2 corresponds to a type 2, ..., a search space n corresponds to a type n. When the change in the system information is associated with the type 1 of terminal device(s), that is, the system information of the type 1 of terminal device(s) has changed, the network device sends a paging message in the search space 1. The target type of terminal device(s) receives the paging message in the search space 1.

It is understood that each type of terminal device(s) is configured with a corresponding resource, and each type of terminal device(s) monitors the paging message sent by the network device on its own corresponding resource. When the network device uses the resource corresponding to the target type of terminal device(s) to send the second paging message, the paging is triggered only for the target type of terminal device(s).

At step 702, changed system information is obtained based on the second paging message.

The change in the system information is associated with the target type of terminal device(s).

In an embodiment of the disclosure, the terminal device may receive the second paging message on a corresponding resource based on the target type to which the terminal device belongs. That is, the terminal device receives an indication that the system information has changed.

The terminal device may obtain the changed system information based on the second paging message.

In conclusion, the second paging message is received on a resource corresponding to the target type to which the terminal device belongs, and the changed system information is obtained based on the second paging message. Different types of terminal devices may be divided into multiple paging groups. When the system information of only a certain type of terminal device(s) has changed, the network device sends a paging message on a resource corresponding to the type. Each type of terminal device(s) performs the paging monitoring on its own corresponding resource, but only the corresponding type of terminal device(s) may obtain the paging message. The network device only triggers the paging for this type of terminal device(s) and only this type of terminal device(s) may obtain the changed system information, which effectively saves signaling overhead, reduces power consumption and improves communication efficiency.

FIG. 8 is a flowchart illustrating a paging triggering method according to an embodiment of the disclosure. It is noteworthy that the paging triggering method according to embodiments of the disclosure is performed by a terminal device. As illustrated in FIG. 8, the method includes the following.

At step 801, a PEI sent by a network device is received.

The PEI is used for instructing a target type of terminal device(s) to receive a third paging message. It is understandable that the target type may be any one of the at least one type. In embodiments of the disclosure, the methods for classifying the terminal devices are as described above and will not be repeated here.

The system information may be at least one of an MIB or an SIB.

In an embodiment of the disclosure, each type has a corresponding PEI. In response to a change in system information being a change associated with the target type of terminal device(s), the network device sends the PEI to the target type of terminal device(s).

After receiving the PEI, the target type of terminal device(s) receives the third paging message at a certain PO based on the PEI, i.e., the network device triggers the paging for the target type of terminal device(s). The target type of terminal device(s) may obtain the changed system information in response to the triggered paging.

In some implementations, the PEI may be carried in DCI.

In some implementations, the DCI may carry a respective PEI corresponding to each type of terminal device(s). The PEI is used for instructing the corresponding type of terminal device(s) to receive or not receive a paging message.

In some examples, an information field in the DCI may carry the respective PEI corresponding to each type of terminal device(s). The bit value of a bit included in the information field of the PEI may be used for instructing a certain type of terminal device(s) to receive or not receive a paging message. For example, if the bit value is 1, it indicates that the corresponding type of terminal device(s) receives the paging message, and if the bit value is 0, it indicates that the corresponding type of terminal device(s) does not receive the paging message. Or, if the bit value is 0, it indicates that the corresponding type of terminal device(s) receives the paging message, and if the bit value is 1, it indicates that the corresponding type of terminal device(s) does not receive the paging message.

For example, in the serving cell where the network device is located, there may be n types of terminal devices. Each type of terminal device(s) among these n types of terminal devices is configured with a corresponding PEI, and the DCI carries the PEIs respectively corresponding to these n types of terminal devices. In an example, the DCI at least has an information field containing n bits respectively corresponding to the n types of terminals, in which a first bit is a PEI corresponding to the type 1, a second bit is a PEI corresponding to the type 2, ......, an nth bit is a PEI corresponding to the type n, and if the bit value is 1, it indicates that the corresponding type of terminal device(s) receives the paging message, and if the bit value is 0, it indicates that the corresponding type of terminal device(s) does not receive the paging message. When the change in the system information is associated with the type 1 of terminal device(s), i.e., the system information of the type 1 of terminal device(s) has changed, the network device sends the DCI carrying the PEIs corresponding to the n types and in the n-bit information field, the first bit has a bit value of 1 and the remaining bits all have a bit value of 0. That is, only the target type of terminal device(s) receives the paging message at a certain PO, while other types of terminal devices do not need to receive the paging message (e.g., they may remain in a sleep state). Certainly, using the bit value of 1 for instructing the corresponding type of terminal device(s) to receive the paging message is only one possible implementation, and it is also possible that the bit value of 0 is used for instructing the corresponding type of terminal device(s) to receive the paging message.

It is understood that in the serving cell where the network device is located, any terminal device may receive the DCI carrying the respective PEI corresponding to each type of terminal device(s) of the at least one type of terminal device(s).

Certainly, using different bits corresponding to different types of terminal devices is an explicit indication way, and an implicit indication may also be adopted. For example, different DCI formats correspond to different types of terminal devices, different coding methods correspond to different types of terminal devices, or the like.

At step 802, in response to the PEI, a third paging message is received.

After receiving the PEI, the target type of terminal device(s) receives the third paging message based on the indication of the PEI. That is, the network device triggers the paging for the target type of terminal device(s). The target type of terminal device(s) may obtain changed system information in response to the triggered paging.

At step 803, changed system information is obtained based on the third paging message.

The change in the system information is associated with the target type of terminal device(s).

In an embodiment of the disclosure, the terminal device may receive the third paging message based on the PEI. That is, the terminal device receives an indication that the system information has changed.

The terminal device may obtain the changed system information based on the third paging message.

In conclusion, the terminal device receives the PEI sent by the network device. In response to the PEI, the terminal device receives the third paging message and obtains changed system information based on the third paging message. Different types of terminal devices may be divided into multiple paging groups. When the system information of only a certain type of terminal device(s) has changed, the network device sends a PEI to instruct the target type of terminal device(s) to receive a paging message, and only the target type of terminal device(s) may obtain the paging message and the paging is triggered only for the target type of terminal device(s), so that the target type of terminal device(s) may obtain the changed system information, which effectively saves signaling overhead, reduces power consumption and improves communication efficiency.

It is noted that in embodiments of the disclosure, the first paging message, the second paging message, and the third paging message, may all be the same paging message. They are named differently only to differentiate the application scenarios, and it does not mean that their contents are different. Certainly, the first paging message, the second paging message, and the third paging message may be different messages, which is not limited in embodiments of the disclosure.

Corresponding to the paging triggering method according to above embodiments, the disclosure also provides paging triggering apparatuses. Since the apparatuses according to embodiments of the disclosure correspond to the methods according to the above embodiments, the implementations of the methods are applicable to the apparatuses according to embodiments, which will not be described in detail in this embodiment.

FIG. 9 is a schematic diagram illustrating a paging triggering apparatus 900 according to an embodiment of the disclosure.

As illustrated in FIG. 9, the apparatus 900 includes: a transceiver unit 910.

The transceiver unit 910 is configured to, in response to a change in system information, trigger a paging for a target type of terminal device(s);
in which the change in the system information is associated with the target type of terminal device(s) among at least one type of terminal device(s).

In some examples, in the at least one type, each type is configured with at least one of a corresponding P-RNTI, a corresponding resource or a corresponding PEI.

In some examples, the transceiver unit 910 is configured to:
scramble a first paging message using a P-RNTI corresponding to the target type of terminal device(s); and
send the scrambled first paging message to the target type of terminal device(s).

In some examples, the transceiver unit 910 is configured to:
send a second paging message using a resource corresponding to the target type of terminal device(s).

In some examples, the resource includes at least one of:
a BWP, a CORESET, a search space, or a PO.

In some examples, the transceiver unit 910 is configured to:
send a PEI to the target type of terminal device(s), the PEI being used for instructing the target type of terminal device(s) to receive a third paging message; and
send the third paging message to the target type of terminal device(s).

In some examples, the PEI is carried in DCI.

With the paging triggering apparatus according to embodiments, in response to the change in the system information, the paging is triggered for the target type of terminal device(s). The change in the system information is associated with the target type of terminal device(s) among at least one type of terminal device(s). Different types of terminal devices may be divided into multiple paging groups. When the system information of only a certain type of terminal device(s) has changed, the network device only triggers the paging for this type of terminal device(s), which effectively saves signaling overhead, reduces power consumption and improves communication efficiency.

FIG. 10 is a schematic diagram illustrating a paging triggering apparatus 1000 according to an embodiment of the disclosure.

As illustrated in FIG. 10, the apparatus 1000 includes: a transceiver unit 1010.

The transceiver unit 1010 is configured to, in response to a paging triggered by a network device, obtain changed system information, in which a change in system information is associated with a target type to which the terminal device belongs.

In some examples, the target type is one of at least one type to which terminal devices belongs.

Each of the at least one type is configured with at least one of a corresponding P-RNTI, a corresponding resource or a corresponding PEI.

In some examples, the transceiver unit 1010 is configured to:
receive a first paging message sent by the network device, in which the first paging message is scrambled using a P-RNTI corresponding to the target type to which the terminal device belongs.

In some examples, the transceiver unit 1010 is configured to:
receive a second paging message on a resource corresponding to the target type to which the terminal device belongs.

In some examples, the resource includes at least one of:
a BWP, a CORESET, a search space, or a PO.

In some examples, the transceiver unit 1010 is configured to:
receive a PEI sent by the network device; and
in response to the PEI, receive a third paging message.

In some examples, the PEI is carried in DCI.

With the paging triggering apparatus of the embodiments, in response to the paging triggered by the network device, the changed system information is obtained, in which the change in the system information is associated with the target type to which the terminal device belongs. Different types of terminal devices may be divided into multiple paging groups. When the system information of only a certain type of terminal device(s) has changed, the network device only triggers the paging for this type of terminal device(s), which effectively saves signaling overhead, reduces power consumption and improves communication efficiency.

In order to realize above embodiments, embodiments of the disclosure also provide a communication device including: a processor and a memory having a computer program stored thereon. When the computer program is executed by the processor, the methods illustrated in embodiments of FIGS. 1 to 4 are performed.

In order to realize above embodiments, embodiments of the disclosure also provide a communication device including: a processor and a memory having a computer program stored thereon. When the computer program is executed by the processor, the methods illustrated in embodiments of FIGS. 5 to 8 are performed.

In order to realize above embodiments, embodiments of the disclosure also provide a communication device including: a processor and an interface circuit. The interface circuit is configured to receive code instructions and transmit them to the processor. The processor is configured to run the code instructions to perform the methods illustrated in embodiments of FIGS. 1 to 4.

In order to realize above embodiments, embodiments of the disclosure also provide a communication device including: a processor and an interface circuit. The interface circuit is configured to receive code instructions and transmit them to the processor. The processor is configured to run the code instructions to perform the methods illustrated in embodiments of FIGS. 5 to 8.

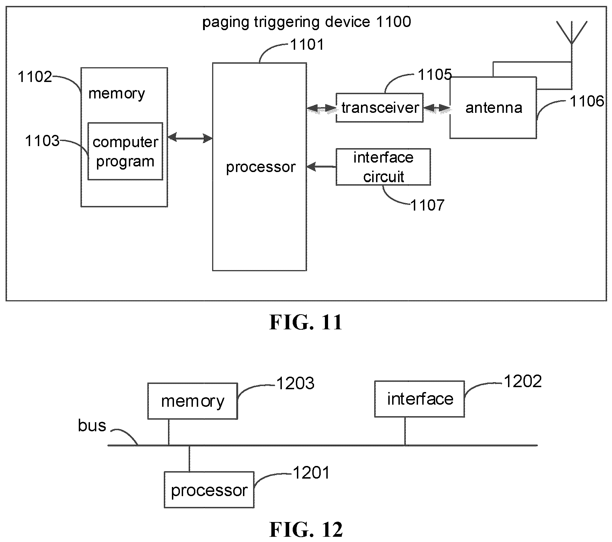

As illustrated in FIG. 11, FIG. 11 is a schematic diagram illustrating a paging triggering device 1100 according to an embodiment of the disclosure. The paging triggering device 1100 may be a network device, a terminal device, or a chip, a chip system or a processor that supports the network device to realize the above-described methods, or a chip, a chip system or a processor that supports the terminal device to realize the above-described methods. The device may be used to realize the methods described in the above method embodiments with reference to the description of the above-described method embodiments.

The paging triggering device 1100 may include one or more processors 1101. The processor 1101 may be a general purpose processor or a dedicated processor, such as, a baseband processor or a central processor. The baseband processor is used for processing communication protocols and communication data. The central processor is used for controlling the paging triggering device (e.g., base station, baseband chip, terminal device, terminal device chip, DU, or CU), executing computer programs, and processing data of the computer programs.

In some examples, the paging triggering device 1100 may include one or more memories 1102 on which computer programs 1103 may be stored. The processor 1101 executes the computer programs 1103 to cause the paging triggering device 1100 to perform the methods described in the above method embodiments. The computer program 1103 may be solidified in the processor 1101, in which case the processor 1101 may be implemented by hardware.

In some examples, data may also be stored in the memory 1102. The paging triggering device 1100 and the memory 1102 may be provided separately or may be integrated together.

In some examples, the paging triggering device 1100 may also include a transceiver 1105 and an antenna 1106. The transceiver 1105 may be referred to as transceiver unit, transceiver machine, or transceiver circuit, for realizing the transceiver function. The transceiver 1105 may include a receiver and a transmitter. The receiver may be referred to as receiver machine or receiving circuit, for realizing the receiving function. The transmitter may be referred to as transmitter machine or transmitting circuit, for realizing the transmitting function.

In some examples, the paging triggering device 1100 may also include one or more interface circuits 1107. The interface circuits 1107 are used to receive code instructions and transmit them to the processor 1101. The processor 1101 runs the code instructions to cause the paging triggering device 1100 to perform the method described in the method embodiments.

In an implementation, the processor 1101 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the paging triggering device 1100 may include circuits. The circuits may implement the sending, receiving or communicating function in the preceding method embodiments. The processor and transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The paging triggering device in the above description of embodiments may be a network device or a terminal device, but the scope of the paging triggering device described in the disclosure is not limited thereto, and the structure of the paging triggering device may not be limited by FIGS. 9 and 10. The paging triggering device may be a stand-alone device or may be part of a larger device. For example, the described paging triggering device may be:
(1) a stand-alone IC, chip, chip system or subsystem;
(2) a collection of ICs including one or more ICs, for example, the collection of ICs may also include storage components for storing data and computer programs;
(3) an ASIC, such as a modem;
(4) modules that may be embedded within other devices;
(5) receivers, terminal devices, smart terminal devices, cellular phones, wireless devices, handheld machines, mobile units, in-vehicle devices, network devices, cloud devices, artificial intelligence devices, and the like; and
(6) others.

The case where the paging triggering device may be a chip or a chip system may be referred to the schematic diagram of a chip shown in FIG. 12. In FIG. 12, the chip includes a processor 1201 and an interface 1202. There may be one or more processors 1201, and there may be multiple interfaces 1202.

For the case where the chip is used to implement the functions of the network device in the embodiments of the disclosure,
the interface 1202 is configured to receive code instructions and transmit them to the processor; and
the processor 1201 is configured to run the code instructions to implement the methods of FIGS. 1 to 4.

For the case where the chip is used to implement the functions of the terminal device in the embodiments of the disclosure,
the interface 1202 is configured to receive code instructions and transmit them to the processor; and
the processor 1201 is configured to run the code instructions to implement the methods of FIGS. 5 to 8.

In some examples, the chip further includes a memory 1203 used for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

Embodiments of the disclosure also provide a communication system. The system includes a paging triggering device as a terminal device and a paging triggering device as a network device in the preceding embodiments of FIGS. 9-10. Or, the system includes a paging triggering device as a terminal device and a paging triggering device as a network device in the preceding embodiment of FIG. 11.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that may be understood by the communication device, and the values or representations of the parameters may be other values or representations that may be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

It is understandable that the steps may be reordered, added or deleted using various forms of the processes shown above. For example, the steps in the disclosure may be performed in parallel or sequentially or in different orders, as long as the desired results of the technical solutions disclosed in the disclosure are achieved, which are not limited herein.

The specific embodiments described above do not constitute a limitation on the scope of protection of the disclosure. It should be understood by those skilled in the art that various modifications, combinations, sub-combinations and substitutions may be made depending on the design requirements and other factors. Any modifications, equivalent substitutions and improvements made within the spirit and principles of the disclosure shall be included in the scope of protection of the disclosure.

## Claims

1. A paging triggering method, performed by a network device, comprising:
in response to a change in system information, triggering a paging for a target type of terminal device;
wherein the change in the system information is associated with the target type of terminal device among at least one type of terminal device.

2. The method of claim 1, wherein in the at least one type, each type is configured with at least one of a corresponding paging radio network temporary identity, a corresponding resource or a corresponding paging early indication.

3. The method of claim 2, wherein triggering the paging for the target type of terminal device comprises:
scrambling a first paging message using a paging radio network temporary identity corresponding to the target type; and
sending a scrambled first paging message to the target type of terminal device.

4. The method of claim 2, wherein triggering the paging for the target type of terminal device comprises:
sending a second paging message using a resource corresponding to the target type.

5. The method of claim 4, wherein the resource comprises at least one of:
a bandwidth part (BWP), a control resource set (CORESET), a search space, or a paging occasion.

6. The method of claim 2, wherein triggering the paging for the target type of terminal device comprises:
sending the paging early indication to the target type of terminal device, the paging early indication being used for instructing the target type of terminal device to receive a third paging message; and
sending the third paging message to the target type of terminal device.

7. The method of claim 6, wherein the paging early indication is carried in downlink control information (DCI).

8. A paging triggering method, performed by a terminal device, comprising:
in response to a paging triggered by a network device, obtaining changed system information, wherein a change in system information is associated with a target type to which the terminal device belongs.

9. The method of claim 8, wherein the target type is one of at least one type, and each of the at least one type is configured with at least one of a corresponding paging radio network temporary identity, a corresponding resource or a corresponding paging early indication.

10. The method of claim 9, further comprising:
receiving a first paging message sent by the network device, wherein the first paging message is scrambled using a paging radio network temporary identity corresponding to the target type to which the terminal device belongs.

11. The method of claim 9, further comprising:
receiving a second paging message on a resource corresponding to the target type to which the terminal device belongs.

12. The method of claim 11, wherein the resource comprises at least one of:
a bandwidth part (BWP), a control resource set (CORESET), a search space, or a paging occasion.

13. The method of claim 9, further comprising:
receiving a paging early indication sent by the network device; and
in response to the paging early indication, receiving a third paging message.

14. The method of claim 13, wherein the paging early indication is carried in downlink control information (DCI).

15. A paging triggering apparatus, applied to a network device, comprising:
a transceiver unit, configured to, in response to a change in system information, trigger a paging for a target type of terminal device;
wherein the change in the system information is associated with the target type of terminal device in at least one type of terminal device.

16. The apparatus of claim 15, wherein in the at least one type, each type is configured with at least one of a corresponding paging radio network temporary identity, a corresponding resource or a corresponding paging early indication.

17. The apparatus of claim 16, wherein the transceiver unit is configured to:
scramble a first paging message using a paging radio network temporary identity corresponding to the target type; and
send a scrambled first paging message to the target type of terminal device.

18. The apparatus of claim 16, wherein the transceiver unit is configured to:
send a second paging message using a resource corresponding to the target type.

19. The apparatus of claim 18, wherein the resource comprises at least one of:
a bandwidth part (BWP), a control resource set (CORESET), a search space, or a paging occasion.

20. The apparatus of claim 16, wherein the transceiver unit is configured to:
send the paging early indication to the target type of terminal device, the paging early indication being used for instructing the target type of terminal device to receive a third paging message; and
send the third paging message to the target type of terminal device.

21. The apparatus of claim 20, wherein the paging early indication is carried in downlink control information (DCI).

22. A paging triggering apparatus, applied to a terminal device, comprising:
a transceiver unit, configured to, in response to a paging triggered by a network device, obtain changed system information, wherein a change in system information is associated with a target type to which the terminal device belongs.

23. The apparatus of claim 22, wherein the target type is one of at least one type, and each of the at least one type is configured with at least one of a corresponding paging radio network temporary identity, a corresponding resource or a corresponding paging early indication.

24. The apparatus of claim 23, wherein the transceiver unit is configured to:
receive a first paging message sent by the network device, wherein the first paging message is scrambled using a paging radio network temporary identity corresponding to the target type to which the terminal device belongs.

25. The apparatus of claim 23, wherein the transceiver unit is configured to:
receive a second paging message on a resource corresponding to the target type to which the terminal device belongs.

26. The apparatus of claim 25, wherein the resource comprises at least one of:
a bandwidth part (BWP), a control resource set (CORESET), a search space, or a paging occasion.

27. The apparatus of claim 23, wherein the transceiver unit is configured to:
receive a paging early indication sent by the network device; and
in response to the paging early indication, receive a third paging message.

28. The apparatus of claim 27, wherein the paging early indication is carried in downlink control information (DCI).

29. A communication device comprising a processor and a memory having a computer program stored thereon, wherein when the computer program is executed by the processor, the device is caused to perform the method of any one of claims 1 to 7.

30. A communication device comprising a processor and a memory having a computer program stored thereon, wherein when the computer program is executed by the processor, the device is caused to perform the method of any one of claims 8 to 14.

31. A communication device comprising: a processor and an interface circuit;
wherein the interface circuit is configured to receive code instructions and transmit the code instructions to the processor; and
the processor is configured to run the code instructions to perform the method of any one of claims 1 to 7.

32. A communication device comprising: a processor and an interface circuit;
wherein the interface circuit is configured to receive code instructions and transmit code instructions to the processor; and
the processor is configured to run the code instructions to perform the method of any one of claims 8 to 14.

33. A computer-readable storage medium for storing instructions, wherein when the instructions are executed, the method of any one of claims 1 to 7 is performed.

34. A computer-readable storage medium for storing instructions, wherein when the instructions are executed, the method of any one of claims 8 to 14 is performed.
